# EUROPEAN PATENT SPECIFICATION

(11) **EP 3 643 157 B1**
(45) Date of publication and mention of the grant of the patent: **02.12.2026**
(21) Application number: 19201884.4
(22) Date of filing: 20.10.2017
(51) Int. Cl.: A01D 34/416

(54) **TRIMMER LINE WITH CENTERING FEATURE**
TRIMMERFADEN MIT ZENTRIERFUNKTION
LIGNE DE TONDEUSE AVEC FONCTION DE CENTRAGE

(30) Priority: 20.10.2016 US 201662410762 P
(43) Date of publication of application: 29.04.2020
(62) Document number(s) of the earlier application(s) in accordance with Art. 76 EPC: 17197531.1 / 3 311 644
(73) Proprietor: Techtronic Outdoor Products Technology Limited, Hamilton HM12 (BM)
(72) Inventor: NOLIN, Eric, Anderson, South Carolina 29621 (US); MORRISON, Robert L., Shreveport, Louisiana 71129 (US)
(74) Representative: Zimmermann & Partner Patentanwälte mbB

(56) References cited:
- EP-A1- 1 570 717
- EP-A1- 2 923 548
- EP-B1- 2 923 548
- WO-A1-2009/124593
- FR-A1- 2 793 648
- US-A- 6 045 911

## Description

### CROSS-REFERENCE TO RELATED APPLICATION

### FIELD

The present invention relates to trimmer lines and, more particularly, to a trimmer line with a centering feature.

### SUMMARY

Generally, trimmers are used to cut grass and weeds and are often used to edge around trees, near fences and walls, along landscape borders, etc. Conventional string trimmers (see US 6 045 911) include an elongated shaft with a rotating element or gear head near the end of the elongated shaft, and a trimmer head attached to the gear head. Typically, the trimmer head is configured to receive and retain one or more trimmer lines therein such that the trimmer head rotates the trimmer line(s) allowing the trimmer line to cut and trim along landscaped areas, fences, walls, etc.

The invention provides a trimmer head according to claim 1 and a use of a trimmer line according to claim 14. Preferred embodiments are presented in the dependent claims.

### BRIEF DESCRIPTION OF THE DRAWINGS

FIG. 1 is a schematic view of a trimmer head with a trimmer line positioned therein.
FIG. 2 is a schematic view of the trimmer head of FIG. 1, with the line wound on the inner housing.
FIGS. 3-8a illustrate various alternative constructions of the trimmer line of FIG. 1.

Before any independent constructions of the invention are explained in detail, it is to be understood that the invention is not limited in its application to the details of construction and the arrangement of components set forth in the following description or illustrated in the following drawings. The invention is capable of other independent constructions and of being practiced or of being carried out in various ways. Also, it is to be understood that the phraseology and terminology used herein is for the purpose of description and should not be regarded as limiting.

Use of "including" and "comprising" and variations thereof as used herein is meant to encompass the items listed thereafter and equivalents thereof as well as additional items. Use of "consisting of" and variations thereof as used herein is meant to encompass only the items listed thereafter and equivalents thereof.

### DETAILED DESCRIPTION

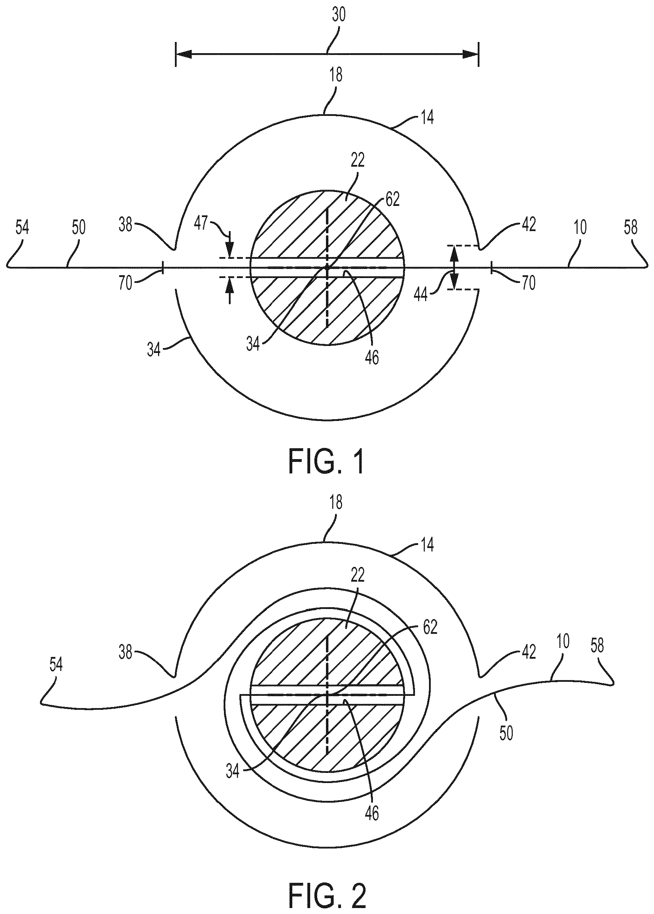

FIGS. 1-8a illustrate a trimmer line 10 for use with a wind-up style trimmer head 14. In the illustrated constructions, the trimmer line 10 includes a centering feature 70 to properly position the trimmer line 10 within the trimmer head 14 during the loading operation. Once loaded, a powered trimmer (not shown) rotates the trimmer head 14 and the trimmer line 10 to cause the trimmer line 10 to cut vegetation such as grass, weeds, etc.

Referring to FIGS. 1 and 2, the illustrated trimmer head 14 includes an outer housing 18, an inner housing 22 rotatable with respect to the outer housing 18, and feed mechanism (e.g., a bump knob (not shown)) to selectively permit the inner housing 22 to rotate with respect to the outer housing 18. During use, the trimmer head 14 at least partially receives and stores the trimmer line 10 by spooling a portion of the trimmer line 10 therein (FIG. 1). The trimmer head 14 is configured to release a pre-determined length of the trimmer line 10 from the trimmer head 14 (e.g., unspool) each time the feed mechanism is actuated.

While the illustrated trimmer head 14 is configured to receive and support a single length of trimmer line 10 therein, it is understood that the trimmer head 14 may be modified to accept additional trimmer lines (not shown) as necessary to produce the desired trimming characteristics.

The outer housing 18 of the trimmer head 14 is substantially cylindrical in shape defining a diameter 30 (FIG. 1) and an axis of rotation 34. The outer housing 18 includes a substantially annular outer wall 34 defining a first aperture 38 and an opposite second aperture 42. In the illustrated construction, the apertures 38, 42 each have a width 44 and are sized to allow the trimmer line 10 to pass therethrough.

The inner housing 22 of the trimmer head 18 is positioned at least partially inside the outer housing 18 and is configured to selectively rotate with respect to the outer housing 18 about the axis of rotation 34. The illustrated inner housing 22 defines a channel 46 extending radially therethrough and having a channel width 47 sized to allow at least a portion of the trimmer line 10 to be positioned therein.

During use, rotation of the inner housing 22 in a first direction (e.g., clockwise in FIG. 2) with respect to the outer housing 18 causes at least a portion of the trimmer line 10 to be wound about an outer surface of the inner housing 22. In contrast, rotation of the inner housing 22 in an opposite second direction (e.g., counterclockwise in FIG. 2) with respect to the outer housing 18 causes at least a portion of the trimmer line 10 to be unwound from the outer surface of the inner housing 22.

As illustrated in FIGS. 1-8a, the trimmer line 10 is substantially elongated in shape and has a body 50 with a first end 54 and an opposite second end 58. The trimmer line 10 also has a center or center point 62 between and substantially equidistant from ends 54, 58. The trimmer line 10 also defines a length 66 between the ends 54, 58.

In the illustrated construction, the trimmer line 10 has a monofilament construction including a substantially circular cross-section along its length. However, in other constructions (not shown), the trimmer line 10 may be formed from any durable yet flexible material and/or may include multiple individual strands of material woven together. In still other constructions (not shown), the trimmer line 10 may have different cross-sectional shapes such as, but not limited to, elongated, ribbon-shaped, blade-shaped, etc. In still other constructions (not shown), the cross-sectional shape of the trimmer line 10 may vary along its length.

The illustrated trimmer line 10 includes a centering feature 70 configured to allow the user to properly position the trimmer line 10 within the trimmer head 14 during the loading process. More specifically, the illustrated centering feature 70 aids the user in assuring that the center point 62 is substantially aligned with the axis of rotation 34 of the trimmer head 14 for loading. As illustrated, the centering feature 70 ensures that substantially equal lengths of trimmer line 10 extend from the first aperture 38 and the second aperture 42.

The centering feature 70 provides visual, tactile, or audible feedback to the user when the trimmer line 10 is at or near the desired location. The illustrated centering feature 70 is configured to substantially align the geometric center (e.g., the center point 62) of the trimmer line 10 with the axis of rotation 34 of the trimmer head 14. In other constructions (not shown), the centering feature 70 may be configured to align the center of gravity (not shown) or any other point of the trimmer line 10 with the axis of rotation 34 of the trimmer head 14.

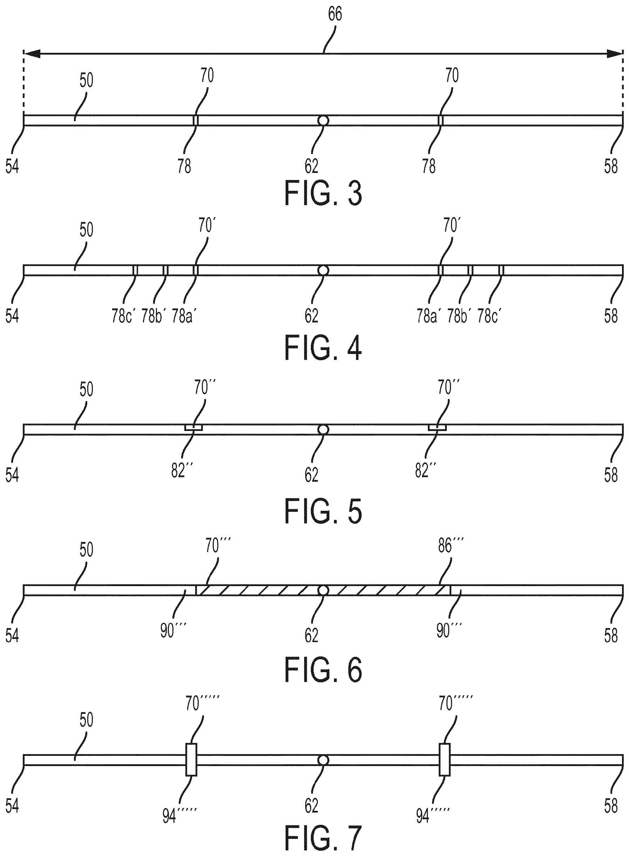

FIG. 3 illustrates one construction of the centering feature 70. As illustrated, the trimmer line 10 includes a pair of indicia 78, each applied to the body 50, to allow the user to visually position the trimmer line 10 within the trimmer head 14. The indicia 78 are each positioned equidistance from the center point 62 and spaced apart from one another by a distance substantially equal to the diameter 30 of the outer housing 18 of the trimmer head 14. As such, both indicia 78 will be positioned proximate to and substantially aligned with a corresponding aperture 38, 42 of the trimmer head 14 when the trimmer line 10 is properly positioned (i.e., when the center point 62 of the trimmer line 10 is substantially aligned with the axis of rotation 34 of the trimmer head 14).

In some constructions, the indicia 78 are spaced from one another a distance slightly greater than the outer diameter 30 of the trimmer head 14 to assure both indicia 78 are visible when the trimmer line 10 is in the desired position. For example, the indicia 78 may be spaced apart approximately 10 mm for use with a trimmer head 14 having a diameter 30 of approximately 9 mm.

In the illustrated construction, each indicium 78 includes a line printed on and extending circumferentially around the outer surface of the trimmer line 10. However in other constructions (not shown), the indicia 78 may include, among other things, for example, an arrow, one or more dots, a broken line, a manufacturer/distributor insignia/logo, other shapes, etc.

FIG. 4 illustrates another construction of the centering feature 70' of the trimmer line 10, which includes multiple sets of indicia 78a', 78b', 78c'. Each of the indicia 78 corresponds to different trimmer heads having different outer diameters (not shown). Each set of indicia 78a', 78b', 78c' is positioned such that both indicia 78a', 78b', 78c' of a particular set are positioned an equal distance from the center point 62 of the trimmer line 10 (i.e., centered about the center point 62), but at different distances from one another. As such, the user may utilize a different set of indicia 78a', 78b', 78c' depending upon the size (i.e., outer diameter) of the trimmer head 14 in which the trimmer line 10 is to be used. In such constructions, each individual set of indicia 78a', 78b', 78c' may include a unique color or design common to both indicia in the set to assure the different sets can be differentiated from one another during use.

FIG. 5 illustrates yet another construction of the centering feature 70" of the trimmer line 10. In this construction, the centering feature 70" includes a pair of notches 82" formed in the body 50 of the trimmer line 10. In the illustrated construction, each notch 82" is positioned substantially equidistance from the center point 62 and spaced a distance from one another substantially equal to the diameter 30 of the outer housing 18 of the trimmer head 14. As such, each notch 82" will be positioned proximate to and substantially aligned with a corresponding aperture 38, 42 when the trimmer line 10 is properly positioned within the trimmer head 14.

In this construction, the trimmer head 14 includes one or more detents (not illustrated) to interact with the notches 82" and provide an audible click or tactile feedback when the notches 82" are substantially aligned with the apertures 38, 42. In other constructions (not shown), the notches 82" may be centered about the center point 62 of the trimmer line 10 and be spaced a distance from one another substantially corresponding to the periphery of the inner housing 22. In such constructions, the inner housing 22 includes one or more detents (not illustrated) to provide an audible click or tactile feedback when the trimmer line 10 is in the desired position.

FIG. 6 illustrates a further construction of the centering feature 70"', which includes a center portion 86‴ having one or more unique attributes from remaining lateral portions 90‴ of the trimmer line 10. The illustrated center portion 86‴ of the trimmer line 10 is centered about the center point 62 and extends over a distance of the trimmer line 10 substantially equal to the diameter 30 of the outer housing 18 of the trimmer head 14. The lateral portions 90‴ include the remaining two portions of trimmer line 10 extending between the center portion 86‴ and the ends 54, 58, respectively. The edges of the center portion 86‴ (i.e., the transition between the center portion 86‴ and the corresponding lateral portion 9‴) are substantially aligned with the apertures 38, 42 of the outer housing 18 of the trimmer head 14 when the trimmer line 10 is properly positioned therein.

In other constructions (not shown), the size of the center portion 86‴ may be slightly less than the outer diameter 30 of the trimmer head 14 such that the center portion 86‴ is not visible to the user when the trimmer line 10 is in the proper position.

In the illustrated construction, the center portion 86‴ is a different color than the lateral portions 90‴ of the trimmer line 10. However, in other constructions (not shown), the center portion 86‴ may have a different cross-sectional shape, texture, thickness, combinations thereof, etc., than the lateral potions 90‴ of the trimmer line 10. In still other constructions (not shown), the centered portion 86‴ of the trimmer line 10 may be formed from a different or separate material than the lateral portions 90"'.

Referring to FIG. 7, another construction of the centering feature 70ʺʺ includes a pair of markers 94ʺʺ coupled to or formed into the trimmer line 10. The markers 94ʺʺ are positioned substantially equidistance from the center point 62 and spaced apart from one another a distance substantially equal to the diameter 30 of the outer housing 18 of the trimmer head 14. As such, both markers 94ʺʺ will be positioned proximate to and substantially aligned with a corresponding aperture 38, 42 when the trimmer line 10 is properly positioned therein. In some constructions, the markers 94ʺʺ are spaced from one another a distance slightly greater than the diameter 30 of the trimmer head 14 to assure both markers 94ʺʺ are visible when the trimmer line 10 is in the desired position.

In the illustrated construction, each marker 94ʺʺ is a separate and substantially cylindrical piece of material coupled to the trimmer line 10 at the appropriate location. In other constructions (not shown), different sizes and shapes of markers 94ʺʺ may be used as necessary to provide the necessary feedback to the user. In some constructions (not shown), either the inner or outer housings 18, 22 may include one or more detents to engage the markers 94ʺʺ, thereby providing audible or tactile feedback to the user.

While the centering features 70', 70", 70‴, and 70ʺʺ are shown in pairs, it is understood that a single element may also be used in some constructions.

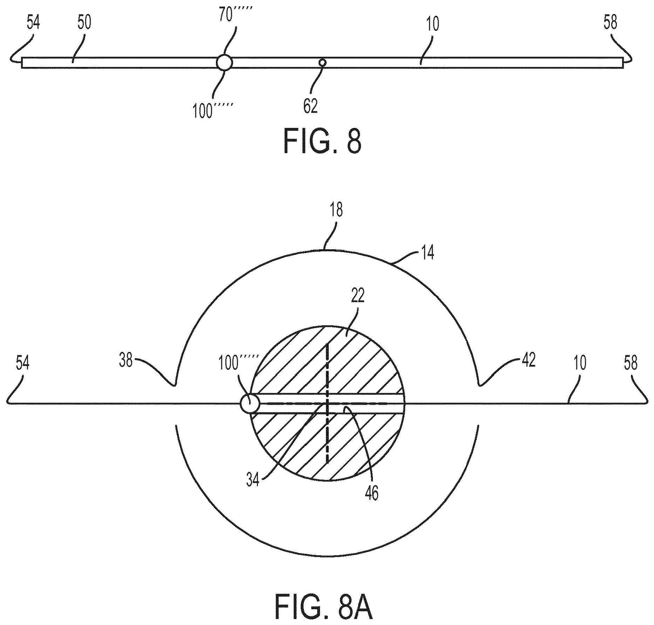

Referring to FIG. 8, in still another construction, of the centering feature 70‴ʺ includes a stop 100‴ʺ formed into or coupled to the trimmer line 10. The stop 100‴ʺ is positioned a distance from the center point 62 approximately half the outer diameter 104 of the inner housing 22. The stop 100‴ʺ is sized such that it is smaller than the diameter 44 of the apertures 38, 42, but larger than the width 47 of the channel 46. As such, the user may insert one end (e.g., the end 58) of the trimmer line 10 into the first aperture 38, through the channel 46, and out the second aperture 42, then continue to feed the line 10 through the trimmer head 14 until the stop 100‴ʺ passes through the first aperture 38 and engages the channel 46 of the inner housing 22 (FIG. 8a), thereby restricting any additional feeding of the trimmer line 10 through the trimmer head 14 after the trimmer line 10 has been properly positioned.

In another construction (not shown), the stop 100‴ʺ may be larger than the diameter 44 of the apertures 38, 42 and will engage the outer surface of the outer housing 18 when the trimmer line 10 is properly positioned.

The stop 100‴ʺ will be closer to one end (e.g., the end 54), and the other end (e.g., the end 58) will be inserted into the trimmer head 14 until the stop 100‴ʺ engages a portion of the trimmer head 14. The end to be inserted (e.g., the end 58) may have an indication to the user to insert that end. Also, once properly aligned, the stop 100‴ʺ, if accessible, may be removed from the trimmer line 10 (e.g., removed radially, broken, etc.).

To load the trimmer line 10 into the trimmer head 14, the user first feeds an end (e.g., the end 58) of the trimmer line 10 through the first aperture 38, through the channel 46, and out the second aperture 38 (FIG. 1). The user then advances the trimmer line 10 until the centering feature 70 indicates, via visual, tactile, or audible feedback, that the trimmer line 10 is in the desired position (i.e., the center point 62 is aligned with the axis of rotation 34 of the trimmer head 14). Once loaded, the inner housing 22 is rotated in the first direction with respect to the outer housing 18, causing the body 50 to wrap around the outside of the inner housing 22 (see FIG. 2).

## Claims

1. A trimmer head (14) defining an axis of rotation (34) and a trimmer line (10) for use with the trimmer head, the trimmer line (10) comprising:
an elongated body (50) having a first end (54), an opposite second end (58), and a center (62) between the first end (54) and the second end (58);
**characterized in that** the trimmer line (10) having a centering feature (70) configured to align the center (62) of the elongated body (50) with the axis of the rotation (34), the centering feature (70) being configured to provide a visual, tactile, or audible feedback to a user when the center (62) is substantially aligned with the axis of the rotation (34),
wherein
the centering feature (70) comprises a pair of notches (82") formed in the body (50) of the trimmer line (10), and positioned substantially equidistance from the center (62) and spaced a distance from one another substantially equal to a diameter of an outer housing (18) of the trimmer head (14); or
the centering feature (70) comprises a pair of markers (94"") coupled to or formed into the trimmer line (10), positioned substantially equidistance from the center (62), and spaced apart from one another a distance substantially equal or slightly greater to a diameter of an outer housing of the trimmer head (14); or
the centering feature (70) comprises a center portion (86) having one or more unique attributes from remaining lateral portions (90"') of the trimmer line (10), or
the centering feature (70) comprises a stop (100"") formed into or coupled to the trimmer line (10), the stop (100"") is positioned a distance from the center (62) approximately half a diameter of an outer housing (18) or of an inner housing (22) of the trimmer head (14), and is sized to engage with a portion of the trimmer head (14) when the trimmer line 10 is properly positioned thereby restricting any additional feeding of the trimmer line (10) through the trimmer head (14).

2. The trimmer line (10) according to claim 1, wherein the centering feature (70) comprises the pair of notches (82") formed in the body (50) of the trimmer line (10), and positioned substantially equidistance from the center (62) and spaced the distance from one another substantially equal to the diameter of the outer housing (18) of the trimmer head (14).

3. The trimmer line (10) according to claim 2, wherein each of the notches (80") is positioned proximate to and substantially aligned with a corresponding aperture (38,42) on the outer housing (18).

4. The trimmer line (10) according to claim 3, wherein detents are provided on the trimmer head (14) for interaction with the notches (82"), to provide an audible click or tactile feedback to the user.

5. The trimmer line (10) according to claim 1, wherein the centering feature (70) comprises the pair of markers (94"") coupled to or formed into the trimmer line (10), positioned substantially equidistance from the center (62), and spaced apart from one another a distance substantially equal or slightly greater to a diameter of an outer housing of the trimmer head (14).

6. The trimmer line (10) according to claim 5, wherein each of the markers (94"") is a cylindrical piece of material coupled to the trimmer line (10).

7. The trimmer line (10) according to any one of claim 5 to claim 6, wherein the markers (94ʺʺ) are engageable by detents provided on the trimmer head (14) to provide an audible click or tactile feedback to the user.

8. The trimmer line (10) according to claim 1, wherein the centering feature (70) comprises the center portion (86"') having one or more unique attributes from remaining lateral portions (90"') of the trimmer line (10).

9. The trimmer line (10) according to claim 8, wherein the center portion (86‴) is centered about the center (62) and extends over a distance of the trimmer line (10) substantially equal to a diameter of an outer housing (18) of the trimmer head (14).

10. The trimmer line (10) according to claim 9, wherein transitions between the center portion (86"') and the corresponding lateral portions (90"') are substantially aligned with respective apertures (38,42) provided on the outer housing (18).

11. The trimmer line (10) according to any one of claim 8 to claim 10, wherein the centered portion (86"') is formed from a different or separate material than the lateral portions (90‴).

12. The trimmer line (10) according to claim 1, wherein the centering feature (70) comprises the stop (100"") formed into or coupled to the trimmer line (10), the stop (100"") is positioned the distance from the center (62) approximately half a diameter of the outer housing (18) or of the inner housing (22) of the trimmer head (14), and is sized to engage with the portion of the trimmer head (14) when the trimmer line 10 is properly positioned thereby restricting any additional feeding of the trimmer line (10) through the trimmer head (14).

13. The trimmer line (10) according to claim 1, wherein the centering feature (70) is configured to be visible outside the trimmer head (14) when the center (62) is substantially aligned with the axis of the rotation (34).

14. Use of a trimmer line (10) with a trimmer head (14) defining an axis of rotation of the rotation (34), the trimmer line (10) comprising:
an elongated body (50) having a first end (54), an opposite second end (58), and a center (62) between the first end (54) and the second end (58) and
a centering feature (70) for aligning the center (62) of the elongated body (50) with the axis of rotation (34), wherein the centering feature (70) is configured to provide a visual, tactile, or audible feedback to a user when the center (62) is substantially aligned with the axis of rotation (34),
and wherein
the centering feature (70) comprises a pair of notches (82") formed in the body (50) of the trimmer line (10), and positioned substantially equidistance from the center (62) and spaced a distance from one another substantially equal to a diameter of an outer housing (18) of the trimmer head (14); or
the centering feature (70) comprises a pair of markers (94) coupled to or formed into the trimmer line (10), positioned substantially equidistance from the center (62), and spaced apart from one another a distance substantially equal or slightly greater to a diameter of an outer housing of the trimmer head (14); or
the centering feature (70) comprises a center portion (86"') having one or more unique attributes from remaining lateral portions (90"') of the trimmer line (10), or
the centering feature (70) comprises a stop (100"") formed into or coupled to the trimmer line (10), the stop (100"") is positioned a distance from the center (62) approximately half a diameter of an outer housing (18) or of an inner housing (22) of the trimmer head (14), and is sized to engage with the portion of the trimmer head (14) when the trimmer line 10 is properly positioned thereby restricting any additional feeding of the trimmer line (10) through the trimmer head (14).

## Patentansprüche

1. Trimmerkopf (14), der eine Rotationsachse (34) und einen Trimmerfaden (10) zur Verwendung mit dem Trimmerkopf definiert, wobei der Trimmerfaden (10) Folgendes umfasst:
einen länglichen Körper (50) mit einem ersten Ende (54), einem gegenüberliegenden zweiten Ende (58) und einer Mitte (62) zwischen dem ersten Ende (54) und dem zweiten Ende (58);
**dadurch gekennzeichnet, dass** der Trimmerfaden (10) ein Zentrierungsmerkmal (70) aufweist, das dazu ausgelegt ist, die Mitte (62) des länglichen Körpers (50) auf die Rotationsachse (34) auszurichten, wobei das Zentrierungsmerkmal (70) dazu ausgelegt ist, einem Benutzer ein visuelles, taktiles oder akustisches Feedback bereitzustellen, wenn die Mitte (62) im Wesentlichen auf die Rotationsachse (34) ausgerichtet ist,
wobei
das Zentrierungsmerkmal (70) ein Paar Kerben (82") umfasst, die im Körper (50) des Trimmerfadens (10) gebildet sind und im Wesentlichen in Aquidistanz von der Mitte (62) positioniert sowie um einen Abstand voneinander beabstandet sind, der im Wesentlichen gleich einem Durchmesser eines äußeren Gehäuses (18) des Trimmerkopfes (14) ist; oder
das Zentrierungsmerkmal (70) ein Paar Marker (94"") umfasst, die an den Trimmerfaden (10) gekoppelt oder in demselben gebildet sind, im Wesentlichen in Aquidistanz von der Mitte (62) positioniert sowie um einen Abstand voneinander beabstandet sind, der im Wesentlichen gleich oder geringfügig größer ist als ein Durchmesser eines äußeren Gehäuses des Trimmerkopfes (14); oder
das Zentrierungsmerkmal (70) einen mittleren Abschnitt (86) umfasst, der ein oder mehrere eindeutige Attribute von verbleibenden seitlichen Abschnitten (90"') des Trimmerfadens (10) umfasst, oder
das Zentrierungsmerkmal (70) einen Anschlag (100"") umfasst, der im Trimmerfaden (10) gebildet oder an denselben gekoppelt ist, der Anschlag (100"") in einem Abstand von der Mitte (62) positioniert ist, der ungefähr eine Hälfte eines Durchmessers eines äußeren Gehäuses (18) oder eines inneren Gehäuses (22) des Trimmerkopfes (14) beträgt, und bemessen ist, um in einen Abschnitt des Trimmerkopfes (14) einzugreifen, wenn der Trimmerfaden 10 korrekt positioniert ist, wodurch eine zusätzliche Zuführung des Trimmerfadens (10) durch den Trimmerkopf (14) eingeschränkt wird.

2. Trimmerfaden (10) nach Anspruch 1, wobei das Zentrierungsmerkmal (70) das Paar Kerben (82") umfasst, die im Körper (50) des Trimmerfadens (10) gebildet sind und im Wesentlichen in Aquidistanz von der Mitte (62) positioniert sowie um den Abstand voneinander beabstandet sind, der im Wesentlichen gleich dem Durchmesser des äußeren Gehäuses (18) des Trimmerkopfes (14) ist.

3. Trimmerfaden (10) nach Anspruch 2, wobei jede der Kerben (80") proximal zu einer entsprechenden Öffnung (38,42) am äußeren Gehäuse (18) positioniert und im Wesentlichen auf dieselbe ausgerichtet ist.

4. Trimmerfaden (10) nach Anspruch 3, wobei zur Interaktion mit den Kerben (82") Rasten am Trimmerkopf (14) bereitgestellt sind, um dem Benutzer einen akustischen Klick oder ein taktiles Feedback bereitzustellen.

5. Trimmerfaden (10) nach Anspruch 1, wobei das Zentrierungsmerkmal (70) das Paar Marker (94"") umfasst, die an den Trimmerfaden (10) gekoppelt oder in demselben gebildet sind, im Wesentlichen in Aquidistanz von der Mitte (62) positioniert sowie um einen Abstand voneinander beabstandet sind, der im Wesentlichen gleich oder geringfügig größer ist als ein Durchmesser eines äußeren Gehäuses des Trimmerkopfes (14).

6. Trimmerfaden (10) nach Anspruch 5, wobei jeder der Marker (94"") ein zylindrisches Stück Material ist, das an den Trimmerfaden (10) gekoppelt ist.

7. Trimmerfaden (10) nach einem von Anspruch 5 bis Anspruch 6, wobei am Trimmerkopf (14) bereitgestellte Rasten in die Marker (94"") eingreifen können, um dem Benutzer einen akustischen Klick oder ein taktiles Feedback bereitzustellen.

8. Trimmerfaden (10) nach Anspruch 1, wobei das Zentrierungsmerkmal (70) den mittleren Abschnitt (86"") umfasst, der ein oder mehrere eindeutige Attribute von verbleibenden seitlichen Abschnitten (90"') des Trimmerfadens (10) umfasst.

9. Trimmerfaden (10) nach Anspruch 8, wobei der mittlere Abschnitt (86"") um die Mitte (62) zentriert ist und sich über einen Abstand des Trimmerfadens (10) erstreckt, der im Wesentlichen gleich einem Durchmesser eines äußeren Gehäuses (18) des Trimmerkopfes (14) ist.

10. Trimmerfaden (10) nach Anspruch 9, wobei Übergänge zwischen dem mittleren Abstand (86"") und den entsprechenden seitlichen Abschnitten (90"') im Wesentlichen auf jeweilige Öffnungen (38,42) ausgerichtet sind, die am äußeren Gehäuse (18) bereitgestellt sind.

11. Trimmerfaden (10) nach einem von Anspruch 8 bis Anspruch 10, wobei der mittlere Abschnitt (86"") aus einem anderen oder separaten Material als die seitlichen Abschnitte (90"') gebildet ist.

12. Trimmerfaden (10) nach Anspruch 1, wobei das Zentrierungsmerkmal (70) den Anschlag (100"") umfasst, der im Trimmerfaden (10) gebildet oder an denselben gekoppelt ist, der Anschlag (100"") im Abstand von der Mitte (62) positioniert ist, der ungefähr eine Hälfte eines Durchmessers des äußeren Gehäuses (18) oder des inneren Gehäuses (22) des Trimmerkopfes (14) beträgt, und bemessen ist, um in den Abschnitt des Trimmerkopfes (14) einzugreifen, wenn der Trimmerfaden 10 korrekt positioniert ist, wodurch eine zusätzliche Zuführung des Trimmerfadens (10) durch den Trimmerkopf (14) eingeschränkt wird.

13. Trimmerfaden (10) nach Anspruch 1, wobei das Zentrierungsmerkmal (70) dazu ausgelegt ist, außerhalb des Trimmerkopfes (14) sichtbar zu sein, wenn die Mitte (62) im Wesentlichen auf die Rotationsachse (34) ausgerichtet ist.

14. Verwendung eines Trimmerfadens (10) mit einem Trimmerkopf (14), der eine Rotationsachse der Rotation (34) definiert, wobei der Trimmerfaden (10) Folgendes umfasst:
einen länglichen Körper (50) mit einem ersten Ende (54), einem gegenüberliegenden zweiten Ende (58) und einer Mitte (62) zwischen dem ersten Ende (54) und dem zweiten Ende (58) und
ein Zentrierungsmerkmal (70) zum Ausrichten der Mitte (62) des länglichen Körpers (50) auf die Rotationsachse (34), wobei das Zentrierungsmerkmal (70) dazu ausgelegt ist, einem Benutzer ein visuelles, taktiles oder akustisches Feedback bereitzustellen, wenn die Mitte (62) im Wesentlichen auf die Rotationsachse (34) ausgerichtet ist,
und wobei
das Zentrierungsmerkmal (70) ein Paar Kerben (82") umfasst, die im Körper (50) des Trimmerfadens (10) gebildet sind und im Wesentlichen in Aquidistanz von der Mitte (62) positioniert sowie um einen Abstand voneinander beabstandet sind, der im Wesentlichen gleich einem Durchmesser eines äußeren Gehäuses (18) des Trimmerkopfes (14) ist; oder
das Zentrierungsmerkmal (70) ein Paar Marker (94) umfasst, die an den Trimmerfaden (10) gekoppelt oder in demselben gebildet sind, im Wesentlichen in Aquidistanz von der Mitte (62) positioniert sowie um einen Abstand voneinander beabstandet sind, der im Wesentlichen gleich oder geringfügig größer ist als ein Durchmesser eines äußeren Gehäuses des Trimmerkopfes (14); oder
das Zentrierungsmerkmal (70) einen mittleren Abschnitt (86"") umfasst, der ein oder mehrere eindeutige Attribute von verbleibenden seitlichen Abschnitten (90"') des Trimmerfadens (10) umfasst, oder
das Zentrierungsmerkmal (70) einen Anschlag (100"") umfasst, der im Trimmerfaden (10) gebildet oder an denselben gekoppelt ist, der Anschlag (100"") in einem Abstand von der Mitte (62) positioniert ist, der ungefähr eine Hälfte eines Durchmessers eines äußeren Gehäuses (18) oder eines inneren Gehäuses (22) des Trimmerkopfes (14) beträgt, und bemessen ist, um in den Abschnitt des Trimmerkopfes (14) einzugreifen, wenn der Trimmerfaden 10 korrekt positioniert ist, wodurch eine zusätzliche Zuführung des Trimmerfadens (10) durch den Trimmerkopf (14) eingeschränkt wird.

## Revendications

1. Tête de débroussailleuse (14) définissant un axe de rotation (34) et un fil de coupe de débroussailleuse (10) destiné à être utilisé avec la tête de débroussailleuse, le fil de coupe de débroussailleuse (10) comprenant :
un corps allongé (50) ayant une première extrémité (54), une deuxième extrémité (58) opposée et un centre (62) entre la première extrémité (54) et la deuxième extrémité (58) ;
**caractérisée en ce que** le fil de coupe de débroussailleuse (10) a un élément de centrage (70) configuré pour aligner le centre (62) du corps allongé (50) avec l'axe de rotation (34), l'élément de centrage (70) étant configuré pour fournir un retour visuel, tactile ou sonore à un utilisateur lorsque le centre (62) est sensiblement aligné avec l'axe de rotation (34),
dans laquelle :
l'élément de centrage (70) comprend une paire d'encoches (82") formées dans le corps (50) du fil de coupe de débroussailleuse (10) et positionnées sensiblement à équidistance du centre (62) et espacées l'une de l'autre par une distance sensiblement égale à un diamètre d'un boîtier externe (18) de la tête de débroussailleuse (14) ; ou bien
l'élément de centrage (70) comprend une paire de marqueurs (94ʺʺ) couplés à ou formés dans le fil de coupe de débroussailleuse (10), positionnés sensiblement à équidistance du centre (62), et espacés l'un de l'autre par une distance sensiblement égale ou légèrement supérieure à un diamètre d'un boîtier externe de la tête de débroussailleuse (14) ; ou bien
l'élément de centrage (70) comprend une partie centrale (86) ayant un ou plusieurs attributs uniques par rapport aux parties latérales restantes (90‴) du fil de coupe de débroussailleuse (10), ou bien
l'élément de centrage (70) comprend une butée (100ʺʺ) formée dans ou couplée au fil de coupe de débroussailleuse (10), la butée (100ʺʺ) est positionnée à une distance du centre (62) représentant approximativement la moitié du diamètre d'un boîtier externe (18) ou d'un boîtier interne (22) de la tête de débroussailleuse (14), et est dimensionnée pour se mettre en prise avec une partie de la tête de débroussailleuse (14), lorsque le fil de coupe de débroussailleuse (10) est correctement positionné, limitant ainsi toute alimentation supplémentaire de fil de coupe de débroussailleuse (10) par la tête de débroussailleuse (14).

2. Fil de coupe de débroussailleuse (10) selon la revendication 1, dans lequel l'élément de centrage (70) comprend la paire d'encoches (82") formées dans le corps (50) du fil de coupe de débroussailleuse (10), et positionnées sensiblement à équidistance du centre (62) et espacées l'une de l'autre par une distance sensiblement égale au diamètre du boîtier externe (18) de la tête de débroussailleuse (14).

3. Fil de coupe de débroussailleuse (10) selon la revendication 2, dans lequel chacune des encoches (80") est positionnée à proximité de et sensiblement alignée avec une ouverture (38, 42) correspondante sur le boîtier externe (18).

4. Fil de coupe de débroussailleuse (10) selon la revendication 3, dans lequel des crans sont prévus sur la tête de débroussailleuse (14) pour l'interaction avec les encoches (82"), afin de fournir un clic sonore ou un retour tactile à l'utilisateur.

5. Fil de coupe de débroussailleuse (10) selon la revendication 1, dans lequel l'élément de centrage (70) comprend la paire de marqueurs (94ʺʺ) couplés à ou formés dans le fil de coupe de débroussailleuse (10), positionnés sensiblement à équidistance du centre (62) et espacés l'un de l'autre par une distance sensiblement égale ou légèrement supérieure à un diamètre d'un boîtier externe de la tête de débroussailleuse (14).

6. Fil de coupe de débroussailleuse (10) selon la revendication 5, dans lequel chacun des marqueurs (94ʺʺ) est une pièce cylindrique de matériau couplée au fil de coupe de débroussailleuse (10).

7. Fil de coupe de débroussailleuse (10) selon l'une quelconque des revendications 5 à 6, dans lequel les marqueurs (94ʺʺ) peuvent être mis en prise par des crans prévus sur la tête de débroussailleuse (14) pour fournir un clic sonore ou un retour tactile à l'utilisateur.

8. Fil de coupe de débroussailleuse (10) selon la revendication 1, dans lequel l'élément de centrage (70) comprend la partie centrale (86‴) ayant un ou plusieurs attributs uniques par rapport aux parties latérales restantes (90‴) du fil de coupe de débroussailleuse (10).

9. Fil de coupe de débroussailleuse (10) selon la revendication 8, dans lequel la partie centrale (86‴) est centrée autour du centre (62) et s'étend sur une distance du fil de coupe de débroussailleuse (10) sensiblement égale à un diamètre d'un boîtier externe (18) de la tête de débroussailleuse (14).

10. Fil de coupe de débroussailleuse (10) selon la revendication 9, dans lequel les transitions entre la partie centrale (86‴) et les parties latérales (90‴) correspondantes sont sensiblement alignées avec des ouvertures (38, 42) respectives prévues sur le boîtier externe (18).

11. Fil de coupe de débroussailleuse (10) selon l'une quelconque des revendications 8 à 10, dans lequel la partie centrée (86‴) est formée à partir d'un matériau différent ou séparé des parties latérales (90‴).

12. Fil de coupe de débroussailleuse (10) selon la revendication 1, dans lequel l'élément de centrage (70) comprend la butée (100ʺʺ) formée dans ou couplée au fil de coupe de débroussailleuse (10), la butée (100ʺʺ) est positionnée à une distance du centre (62) représentant approximativement la moitié d'un diamètre du boîtier externe (18) ou du boîtier interne (22) de la tête de débroussailleuse (14), et est dimensionnée pour se mettre en prise avec la partie de la tête de débroussailleuse (14), lorsque le fil de coupe de débroussailleuse (10) est correctement positionné, limitant ainsi une alimentation supplémentaire du fil de coupe de débroussailleuse (10) par la tête de débroussailleuse (14).

13. Fil de coupe de débroussailleuse (10) selon la revendication 1, dans lequel l'élément de centrage (70) est configuré pour être visible à l'extérieur de la tête de débroussailleuse (14), lorsque le centre (62) est sensiblement aligné avec l'axe de rotation (34).

14. Utilisation d'un fil de coupe de débroussailleuse (10) avec une tête de débroussailleuse (14) définissant un axe de rotation de la rotation (34), le fil de coupe de débroussailleuse (10) comprenant :
un corps allongé (50) ayant une première extrémité (54), une deuxième extrémité (58) opposée et un centre (62) entre la première extrémité (54) et la deuxième extrémité (58) ; et
un élément de centrage (70) pour aligner le centre (62) du corps allongé (50) avec l'axe de rotation (34), dans laquelle l'élément de centrage (70) est configuré pour fournir un retour visuel, tactile ou sonore à un utilisateur lorsque le centre (62) est sensiblement aligné avec l'axe de rotation (34),
et dans laquelle :
l'élément de centrage (70) comprend une paire d'encoches (82") formées dans le corps (50) du fil de coupe de débroussailleuse (10) et positionnées sensiblement à équidistance du centre (62) et espacées l'une de l'autre par une distance sensiblement égale à un diamètre d'un boîtier externe (18) de la tête de débroussailleuse (14) ; ou bien
l'élément de centrage (70) comprend une paire de marqueurs (94) couplés à ou formés dans le fil de coupe de débroussailleuse (10), positionnés sensiblement à équidistance du centre (62), et espacés l'un de l'autre par une distance sensiblement égale ou légèrement supérieure à un diamètre d'un boîtier externe de la tête de débroussailleuse (14) ; ou bien
l'élément de centrage (70) comprend une partie centrale (86‴) ayant un ou plusieurs attributs uniques par rapport aux parties latérales restantes (90‴) du fil de coupe de débroussailleuse (10), ou bien
l'élément de centrage (70) comprend une butée (100ʺʺ) formée dans ou couplée au fil de coupe de débroussailleuse (10), la butée (100ʺʺ) est positionnée à une distance du centre (62) représentant approximativement la moitié du diamètre d'un boîtier externe (18) ou d'un boîtier interne (22) de la tête de débroussailleuse (14), et est dimensionnée pour se mettre en prise avec une partie de la tête de débroussailleuse (14), lorsque le fil de coupe de débroussailleuse (10) est correctement positionné, limitant ainsi toute alimentation supplémentaire de fil de coupe de débroussailleuse (10) par la tête de débroussailleuse (14).
